# EUROPEAN PATENT SPECIFICATION

(11) **EP 1 295 551 B1**
(45) Date of publication and mention of the grant of the patent: **16.06.2004**
(21) Application number: 01500280.1
(22) Date of filing: 30.11.2001
(51) Int. Cl.: A47J 27/08, A47J 27/092

(54) **Safety device for pressure cookers**
Sicherheitsvorrichtung für einen Schnellkochtopf
Dispositif de securité pour autocuiseur

(30) Priority: 25.09.2001 ES 200102358 U; 25.09.2001 ES 200102359 U
(43) Date of publication of application: 26.03.2003
(73) Proprietor: Compania de Menaje Domestico SL, 48160 Derio (Vizcaya) (ES)
(72) Inventor: Garcia Susinos, Roberto, 48003 Bilbao (Vizcaya) (ES)
(74) Representative: Davila Baz, Angel

(56) References cited:
- GB-A- 1 419 008
- US-A- 2 948 431

## Description

### PURPOSE OF THE INVENTION

The present invention relates to a safety device for pressure cookers, which incorporates both the means for opening and closing and the pressure regulator valve. Said device is constituted in such a manner that in the event of the cooker being badly closed, there can be no build-up of pressure, whilst if it is well closed and pressure builds up on the inside of the cooker, it proves impossible to open without the pressure inside it having been released beforehand.

It is an objective of the invention to facilitate a device which in combination with the operation of a pressure sensor of the pressure regulator valve on the inside of the cooker, prevents the opening of the latter in the event of there being pressure built up on the inside thereof, whilst in the open position the device acts in such a manner that in the event of the cooker being badly closed it is impossible for pressure to build up on its inside.

It is also an objective of the invention to facilitate a valve which as soon as pressure is detected on the inside of the cooker to which it is applied, closes the exit for of steam to the outside, whilst when there is excessive pressure with the cooker in operation the valve acts to provide an escape for the excess steam, to the exterior.

### BACKGROUND OF THE INVENTION

Pressure cookers include a safety device to prevent the possibility of the cooker being opened while there is a determined pressure present in the inside and, likewise, devices are known which are intended to prevent pressure from building up in the cooker when it has been badly closed. Such a device is disclosed in US-A-2 948 431.

However, the devices known suffer in a great many cases from poor operation, and often permit the cooker to be opened while the pressure therein is still high.

Up to the present time it is unknown whether there are devices which effectively fulfil and assure the good operation thereof for preventing that the cooker be opened while the pressure on the inside thereof is still above some predetermined limits, as well as devices which also fulfil effectively and safely that a badly closed cooker be prevented from building up pressure on the inside.

Some types of safety valve are known applicable to pressure cookers, based on a spindle which is restrained by a suitably loaded spring, in such a manner that when an overpressure builds up on the inside of the cooker, the applied pressure overcomes the strength of the spring and the spindle, which on the basis of an airtight seal, was closing the exit to the outside, is displaced and permits the steam to escape.

As has already been mentioned, there are various types of valve in existence based on said concept, though valves are not known the operation of which is effective regarding detecting pressure on the inside of the cooker and opening in the event of a pressure in excess of the operating pressure of the cooker in question.

### DESCRIPTION OF THE INVENTION

The device proposed herein, has been designed to overcome the problems outlined above, being based on the functional combination of the operating control for carrying out the opening and closing of the cooker lid with the pressure sensor device on the inside of the cooker, and also in combination with a stop which is incorporated in the lid handle itself, determined elements and components being provided for this in the handle of the cooker body.

More specifically, the device of the invention is based on the operating control which is fitted in the lid handle having, on one hand, a frontally positioned nipple which in the open position pushes a sealing gasket established in the cooker lid itself, which in the event of a badly executed closure said gasket is maintained in the pushed state and consequently maintaining communication with the exterior, preventing pressure from building up on the interior of the cooker. On the other hand, the mentioned control has a projection implemented in the opposite direction, that is, backwards, which in the open position comes up against a stop established perpendicularly in the actual handle of the lid, preventing the backward displacement of the control and consequently making it impossible for the aforementioned sealing gasket to occupy its operational position. Said stop for preventing the backward displacement of the control mounted on the cooker lid handle, is in association with a spring which tends to displace it downwards, but projecting with respect to a recess in the actual lid handle, in order to constitute the stop against the rear projection of the operating control, thereby maintaining the latter displaced forwards and pushing the sealing gasket in order that the latter does not accurately effect the closure or seal in the event of being badly closed.

Then, a correct rotation into the closing position of the lid with respect to the body of the cooker, and therefore of the handle of the former in order that it superimpose itself upon and couple itself with the handle of the cooker body, entails the stop provided in the handle of the lid sliding over a cam provided on the upper surface of the cooker body handle, producing the upward displacement of that stop which, by virtue of a special configuration in which a slot is established, the rear projection of the handle is positioned in that slot making possible the backward displacement of said control, a displacement which is performed automatically as a consequence of said control being constantly pushed backwards by means of a spring.

Thus, the front projection or pivot of the control shall cease to push the sealing gasket, permitting the latter to fit and implement the airtight seal once in its position for closure.

Moreover, it has been foreseen that the operating handle has a lower projecting part which, in combination with a vertical partition and a projection of the cooker body handle, prevents the rotation of the lid with respect to the body when attempting to open the cooker with pressure built up inside.

Furthermore, the device also has means that prevent the separation of the airtight sealing gasket with respect to its seating when there is pressure built up on the inside of the cooker, this being as a consequence of there being a sensor established in a pressure regulation valve fitted for this purpose in the cooker, said sensor being raised by the thrust applied thereto by the pressure built up inside the cooker, preventing the forward displacement of the control, and therefore preventing the pivot or front projection of said control from pushing the sealing gasket and separating it from its seating.

Thus, as soon as there is no longer pressure built up on the inside of the cooker, the sensor descends due to its own weight making possible the forward displacement of the control and thereby separating the sealing gasket from its seating, resulting in the release and egress to the exterior of the steam, which shall make rotation possible and as a consequence the opening of the cooker.

It is also an objective of the invention to provide a valve which has some structural characteristics such that they permit on one hand the detection of pressure in the interior of the cooker when steam starts to be produced therein, and also to implement an opening to allow the steam to escape in the event of excessive pressure building up in the operation of the cooker itself.

More specifically, the valve of the invention is constituted by the mutual coupling of a valve body and a nut, both having an orifice in their base and some lateral orifices, in such a manner that between said body and nut is housed a mechanism formed by an axial collar lodged between the two orifices of their bases, said collar being in association with a spring which tends to maintain it against a step arrangement provided in the valve body which is in communication with the corresponding cooker in which it is applied, so avoiding the egress of steam from the cooker to the outlet.

In this collar is axially mounted a spindle the upper end of which overshoots the collar of the pertinent nut, being incorporated on that projecting part an external cap for protection and support, whilst in correspondence with a point close to its lower end, said spindle has practiced therein an annular groove in which is located an O-ring seal which is situated below the base corresponding to the body of the valve, or communication with the cooker, and of course below the lower end of the collar which is flush with the actual body.

Under these conditions, the valve in idle position, has the pertinent spindle in the down position, that is with the O-ring seal associated therewith separated from the lower part of the collar and therefore from the body in association with the cooker, whilst at the same time the collar in which the aforementioned spindle is axially displaceable is pushed by the corresponding spring and presses an O-ring seal in association with said collar against an internal annular shoulder practiced in the body of the valve for this purpose, closing the passage from the latter to the upper nut.

Under these conditions, when heating occurs inside the cooker and steam is produced, the pressure of the later pushes the axial bolt, the latter being fitted in a completely free manner, until the O-ring seal of the latter is pressing against the lower end of the collar, closing the passage of steam to the exterior. However the collar maintains the seal and therefore the independence between the valve body and the associated nut.

As soon as the pressure on the inside of the cooker surpasses some established limits, like normal operating limits, then said pressure displaces the collar axially upwards against the spring loading, separating the O-ring seal of said collar with respect to the internal annular shoulder of the valve body, allowing the steam which passes through the lateral orifices of said body to reach the upper nut and escape to the exterior through the lateral orifices of the latter.

### DESCRIPTION OF THE DRAWINGS

With the purpose of assisting in a better understanding of the characteristics of the invention, in accordance with a preferred practical embodiment thereof, this descriptive specification is completed with a set of drawings which, as an integral part of said description, illustrate the following in a non-restrictive manner.
Figure 1, shows a plan view of the handle of the lid of a cooker and of the handle of the body of the same cooker in the open position, that is angularly displaced from each other.
Figure 2, shows a side elevation view of that shown in the previous drawing, with the greater part in section in order to see the different elements that intervene in the assembly of the device.
Figure 3, shows a top plan view of the handle of the lid of a cooker superimposed upon the corresponding handle of the body of the cooker.
Figure 4, shows a side elevation view of the closed position of the cooker shown in the previous drawing, with the greater part in section in order to see the different elements that intervene in the assembly of the device.
Figures 5 and 6, show a front and side elevational view of the operating control that forms part of the device of the invention.
Figures 7 and 8, show, finally, a front and side elevational view of the stop for the operating control that also intervenes in the assembly of the device of the invention.
Figure 9, shows a detail view in longitudinal cross-section of the pressure regulation valve shown in figure 2, according to two operational positions, one corresponding to the right-hand half in which the valve is in the idle position, and the other corresponding to the left-hand half, in which the valve is open permitting the steam to pass from the lower part to the upper part for release.
Figure10 shows a plan view of the valve shown in figure 9.
Figure11 shows a view in exploded form of the different piece parts or components that form the valve object of the invention.

### PREFERRED EMBODIMENT OF THE INVENTION

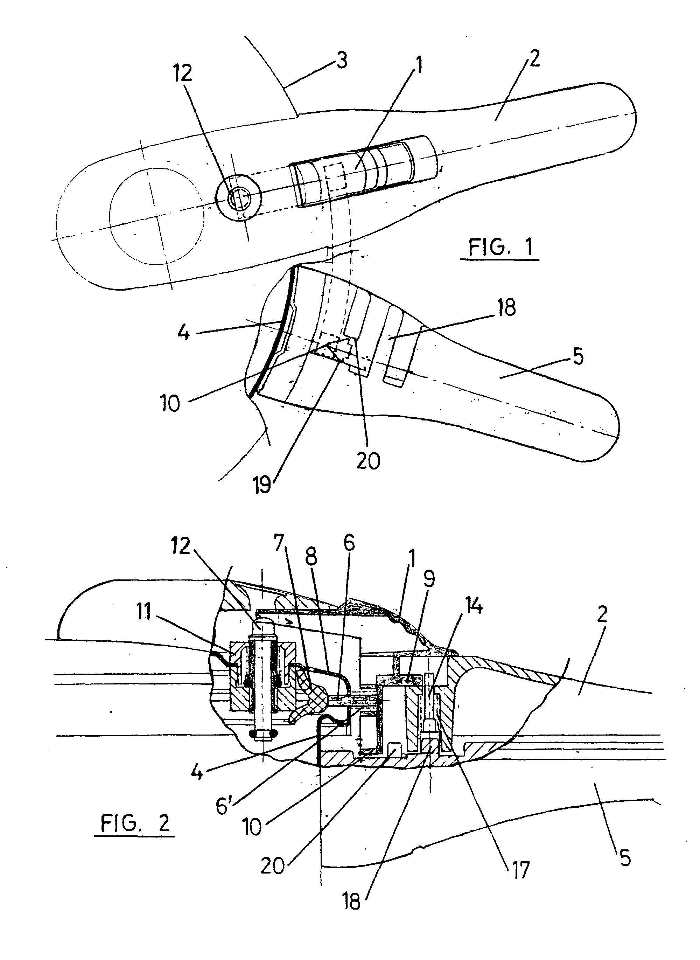

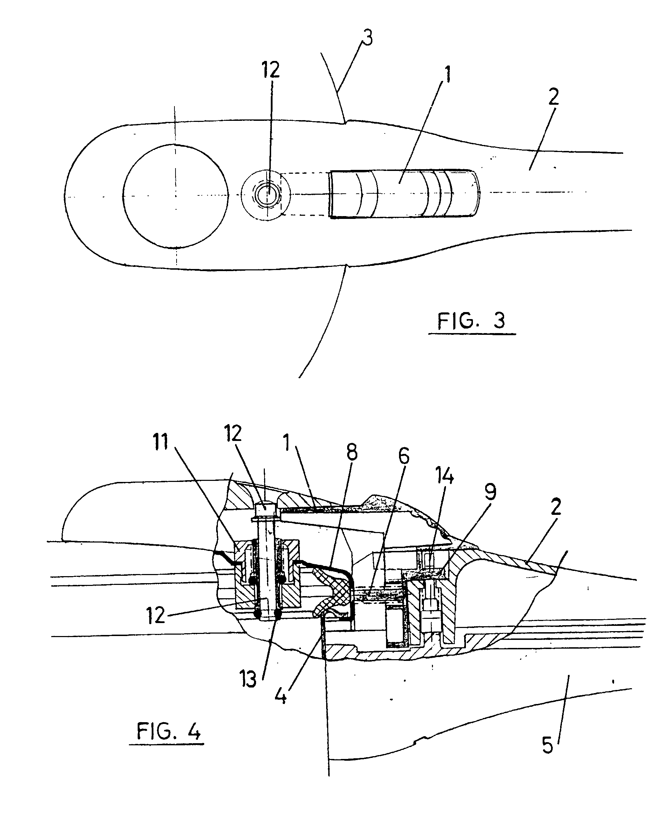

In the light of the foregoing figures, it can be seen how the device of the invention is constituted on a basis of an operating control 1 which is fitted in the pertinent handle 2 of the lid 3 of a cooker, the body 4 of the latter having the respective handle 5, all of which is standard practice. For opening and closing the cooker, it is necessary to actuate the control 1 displacing it forwards or backwards as shall be explained below, in such a manner that in the closed position handles 2 and 5 must be superimposed as shown in figure 3, whilst in the open position they are displaced with respect to each other as is shown in figure 1, whereby said opening and closure have to be performed by rotating lid 3 and therefore handle 2 thereof with respect to the body 4 of the cooker, said rotation being made in one direction or the other depending on whether it is intended to open or to close the cooker.

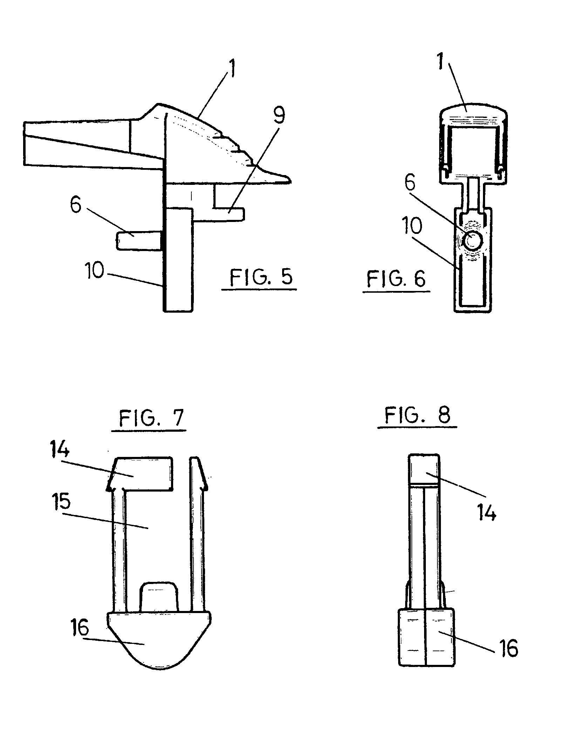

Hence, in accordance now with the characteristics of the device, the mentioned operating control 1 has a front pivot or projection 6 facing the corresponding hermetically sealing gasket 7 in a correctly closed position, and shall settle in the seating 8 established between the cooker lid and body, as is shown in figure 4. Moreover, control 1 also has a rear projection 9, opposing pivot or projection 6, as well as a lower rectangular extension 10, the function of which shall also be explained below.

The cooker also has a pressure regulation valve generally referred to with the number 11, which makes possible the release of steam in the event of excessive pressure, and which pressure regulation valve has a shaft 12 displaceable in the upward and downward direction, which in the idle position is in the down position as is shown in figure 2, whilst in the operational state, as shall be described hereunder, it is displaced upwards, constituting a hermetic seal and preventing the steam from escaping by means of the hermetically sealing O-ring 13.

Forming part of the device is also the stop 14 mounted on the handle 2 itself of the lid 3 of the cooker, which stop is formed by a piece part in which is practiced a groove or cavity 15 and a domed lower part 16, as is shown in figure 6, being forced into a down position by means of a spring 17, said stop 14 being lodged through its upper end in handle 2, just as is shown in figure 2.

For its part, handle 5 of body 4 of the cooker has on its upper surface a ramp or cam 18, and also a vertical partition 19 and a projection 20, the function of which shall also be explained subsequently.

The operating control 1 in the idle and open position of the cooker, has to occupy a forwardly displaced position, as is shown in figures 1 and 2, whilst in the closed position it has to occupy a backwardly retracted position as is shown in figures 3 and 4.

Thus, based on these characteristics, the operation is as follows:

When the cooker is open the device shall provide a safety lock, since the operating control 1 shall be displaced toward the front part, whereby stop 14, pressed by spring 17, shall constitute an obstacle preventing the backward displacement of said operating control 1, because the rear projection 9, as shown in figure 2, encounters the obstacle in the form of stop 14 and impedes the backward displacement of said control 1.

In such a situation, the front pivot or projection 6 of the actual control 1 shall be pushing against the hermetically sealing gasket 7, whereby, should the cooker have been badly closed, said displacement of the gasket 7 out of its seating 8 shall prevent the cooker from building up pressure, by not guaranteeing the hermetic sealing.

In such a situation, pressure sensor 12 formed by the spindle of valve 11 is maintained in the idle position, as there is no pressure on this spindle or sensor 12, that is in the position in which it is shown in figure 2.

If it is attempted to shut the cooker, the rotation of the lid 3 and therefore of handle 2 thereof with respect to body 4 of the cooker, implies a sliding of stop 14, and specifically on its domed lower end 16, over cam 18 formed for this purpose on the handle 5 of the cooker body 4, said rotation and sliding taking place until the rectangular lower part 10 of operating control 1 comes up against the vertical partition 19 of the handle 5 of the cooker body. Under these conditions stop 14 shall have been displaced in an upward direction, that is it will have reached its uppermost point, as is shown in figure 4, whereby external projection 9 of the control 1 shall be lodged in opening or groove 15 established in the stop 14 itself, with which a spring 6' in association with the control 1 pushes the later backwards and the front pivot 6 ceases to push against the gasket 7, the latter reaches its seating and therefore forms the pertinent hermetic seal. Under such conditions the cooker is correctly closed and therefore in conditions for pressure to build up.

In said position of closure, the device fulfils the opening safety function, since when pressure is reached the shaft corresponding to the spindle 12 is pushed upwards, by the effect of the pressure itself, being positioned in front of the forward end of the control 1, whereby any attempt to move the latter forward shall be impeded by said forward end of control 1 coming up against spindle 12. Likewise, if it is attempted to turn the lid 3 and therefore with the handle 2 thereof, the rectangular lower part 10 of the control 1, it comes up against vertical projection 20 established in handle 5 of the cooker body 4, preventing said rotational movement and therefore preventing the cooker being opened.

Now, if total decompression takes place, the spindle 12 that constitutes it shall descend and therefore control 1 shall be capable of being displaced forwards since said spindle constitutes no obstacle whatever for the aforementioned displacement. In said displacement the lower part 10 of control 1 is released from its confrontation with the projection 20. Likewise the rear projection 9 of the control 1 escapes from the opening or groove 15 of the stop 14, whereby if the handle 2 is turned and therefore the lid 3, the stop 14 shall progressively slide downwards over the cam 18, in such a manner that if the control 1 is released, against the action of the spring 6', it shall be intercepted by the upper part of the stop 14 as has already been described. Under such circumstances, the front pivot or projection 6 of the control 1 resumes pushing forward the sealing gasket 7 lifting it out of its seating 8 and therefore preventing the possibility of opening the cooker under pressure.

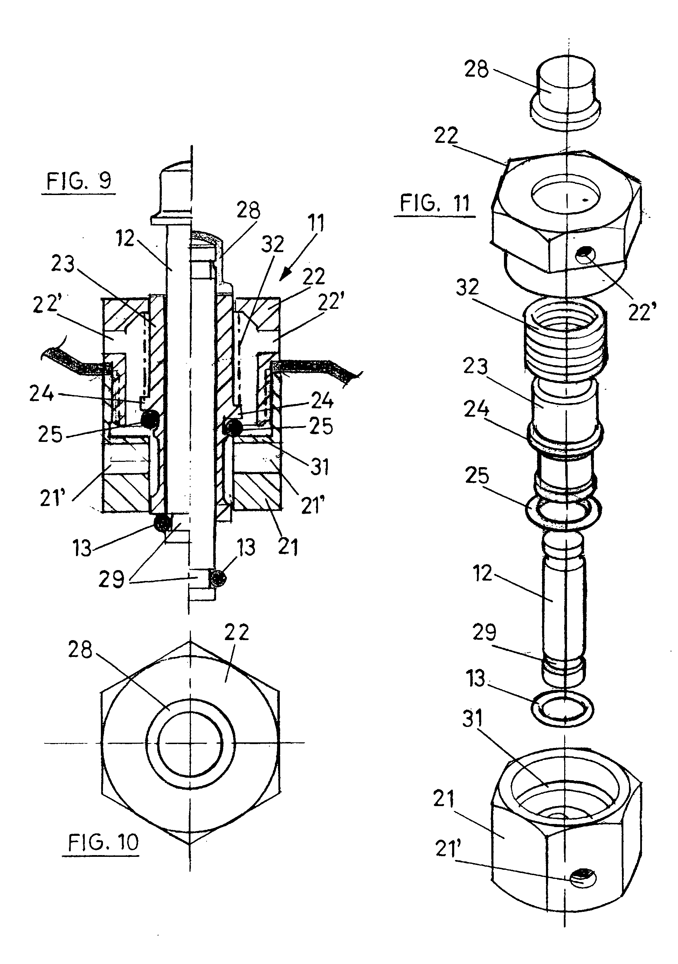

With reference to the figures 9 to 11, it can be seen how the pressure sensor and regulation valve 11, incorporated in the cooker, comprises a mechanism mounted between a valve body 21 and a nut 22 coupled together by a screw thread, and both having a wide concentric orifice practiced in their bases and some lateral orifices 21'-22 the function of which shall be explained below.

The mechanism housed on the inside of the assembly formed by the body 21 and nut 22 comprises an axial collar 23, arranged between the two orifices of the bases of the body 21 and nut 22, which presents an external projection 24 in an approximately intermediate length, determining a shoulder with an annular seating in which is located an O-ring seal 25, it having been foreseen that in said collar 23 is mounted axially a spindle 12 of greater length than the collar, overshooting the top of the latter and the nut 22 itself, the upper end itself being protected by a finishing cap, for support and protection 28, which rests directly on the upper end of the collar 23, whilst close to the lower end the mentioned spindle 12 has an annular channel 29 in which is positioned an O-ring seal 13 which, in the idle position, is removed from the lower end of the collar 23 and therefore from the valve body 21, as can be seen in the right-hand part of figure 9. Moreover, the O-ring seal 25 associated with the collar 23, in said idle position, rests on a shoulder 31 established internally in the body 21, being kept in this position by the thrust of a spring 32 situated between the nut 22 itself and the annular projection 24 of the collar 23.

In accordance with these characteristics, the referenced valve is mounted on the cooker, through the valve body 21 which is logically housed in an orifice established in the lid of the cooker, in such a manner that when it starts to work, and as soon as the heating of the inside of the cooker produces the initial steam and corresponding build-up of pressure, results in the upward displacement of the spindle 12, since this is mounted freely on the collar 23, the upward displacement being limited by the O-ring seal 13 coming up against the lower end of the collar 23, producing the pertinent airtight sealing. Moreover, on the inside of the cooker there continues to be a airtight seal as a consequence of the steam being unable to escape since a second seal is produced by the O-ring seal 25 which rests on and is pressed against the internal shoulder 31 of the valve body 21, pressure which is applied by the spring 32.

Now, if excessive pressure builds up inside the cooker, higher than the working pressure, then said pressure produce an upward thrust on the collar 23 overcoming the force of the spring 32, said thrust implying an axial displacement upwards of said collar 23 and therefore the separation of the O-ring seal 25 from the shoulder 31 of the body 21, whereby the steam passes through the orifices 21' of said body and reaches the nut 22, escaping through the lateral orifices 22' thereof, and so releasing the steam to the exterior.

Thus, the valve described fulfils two functions, one as a pressure sensor on the inside of the cooker, through displacement of the pin, and the other as a safety mechanism, since, in the event of excessive pressure, it opens and permits the release of steam to the exterior.

## Claims

1. Safety device for pressure cookers, which being applicable in that type of cooker which includes a valve (11) that acts in the event of excessive internal pressure in the cooker in order to release the steam, and which valve includes a pressure sensor constituted by a spindle (12) displaceable in an upward and a downward direction on the presence of pressure on the inside and absence thereof respectively, the device being constituted from an operating control (1) displaceable forwards and backwards in order to perform the opening and closure of the cooker, which control (1) is mounted in the handle (2) fixed to the lid (3) of the cooker, the body (4) of the cooker having another handle (5) which in the closed position is situated facing and below the former handle, is **characterised in that** the operating control (1) has on its front part a projection (6) in pivot form opposite the corresponding seal (7) established in a seating (8) between the lid (3) and the body (4) of the cooker, in order to implement the hermetic sealing thereof, said control (1) having a rear projection (9) which can face a stop (14) mounted on the same handle (2) of the lid (3), in such a manner that in the open or idle position said stop (14) constitutes an obstacle that impedes the backward displacement of the operating control (1), confronting a lower projection (10) of the latter with a vertical partition (19) of the handle (5) of the cooker body (4) preventing turning between the two and maintaining the projection (6) in form of a front pivot pushing the sealing gasket (7) out of its seating (8), so that when the cooker is badly closed, it cannot build up pressure on the inside; with the particularity that in the corresponding closure and rotation of the handle (2) of the lid (3) with respect to the handle (5) of the cooker body (4), the stop (14) of the handle (2) of the lid (3) slides over a cam-shaped ramp (18) established in the handle (5) of the cooker body (4), producing the elevation of said stop (14) and the lodging in a groove (15) thereof of the rear projection of the operating control (1), pushed permanently backwards by means of a spring (6'), which displacement and respective retraction of the front pivot-shaped projection makes possible the positioning of the hermetically sealing gasket (7) in its seating (8) in order to obtain the hermetic sealing of the cooker.

2. Safety device, in accordance with claim 1, **characterised in that** in the raised position of the spindle (12) decisive element in the pressure sensor corresponding to the safety valve (11) provided in the cooker, said spindle (12) constitutes an obstacle that renders impossible the forward displacement of the operating control (1), likewise rendering impossible the rotation as, **in that** position, the lower projection (10) of the operating control (1) is opposite a projection (20) provided on the handle (5) of the cooker body (4), ensuring the impossibility of turning and therefore of opening the cooker while there is pressure built up on the inside thereof.

3. Safety device in accordance with claims 1 and 2, **characterised in that** the safety valve comprises a mechanism mounted between a valve body (21), capable of association with the corresponding orifice in the lid of the cooker, and an upper nut (22) fixed to said body (21), which mechanism is formed from a collar (23) housed axially between the valve body (21) and the nut (22), with its ends housed in the opposing bases of said body (21) and nut (22), with the particularity that **in that** collar (23) is fitted in a freely displaceable manner a spindle (12) of greater length than the collar, having its lower end provided with an O-ring seal (13) which in the idle position is separated from the lower end of the collar (23), whilst on heating and build up of steam on the inside of the cooker, the upward displacement of the spindle is produced and the pressing of the O-ring seal (13) thereof against the lower end of the collar (23), blocking the passage; the collar has an intermediate annular projection (24) under which is located a hermetically sealing second O-ring seal (25) which rests against an internal annular projection of the valve body (21), blocking the exit to the exterior, said collar (23) being constantly pushed toward said closed position by means of a spring (32), the force in which is overcome by means of a pressure greater than that of the cooker working pressure, in order to displace in the axial direction the collar (23), the O-ring seal (25) being separated from the internal shoulder of the valve body (21) permitting the steam to escape from the interior of the cooker to the exterior.

## Patentansprüche

1. Sicherheitsvorrichtung für Druckkochtöpfe, welche in der Art von Kochtopf anwendbar ist, die ein Ventil (11) aufweist, welches im Falle von übermäßigem Innendruck im Kochtopf wirkt, um den Dampf abzulassen, wobei das Ventil einen Drucksensor umfasst, welcher durch eine Spindel (12) gebildet wird, welche bei Vorhandensein von Druck auf der Innenseite beziehungsweise Abwesenheit davon in einer Aufwärts- und einer Abwärtsrichtung verschiebbar ist, um das Öffnen und Schließen des Kochtops durchzuführen, wobei die Vorrichtung aus einer Bedienungssteuerung (1) besteht, welche vorwärts und rückwärts verschiebbar ist, um das Öffnen und Schließen des Kochtopfs durchzuführen, wobei die Steuerung (1) auf dem Griff (2), welcher am Deckel (3) des Kochtopfs befestigt ist, angebracht ist, und der Körper (4) des Kochtopfs einen anderen Griff (5) aufweist, welcher in der geschlossenen Position gegenüber und unter dem vorhergehenden Griff angeordnet ist, **dadurch gekennzeichnet, dass** die Bedienungssteuerung (1) an ihrem vorderen Teil einen Vorsprung (6) in Drehzapfenform gegenüber der entsprechenden Dichtung (7) aufweist, welche in einer Aufnahme (8) zwischen dem Deckel (3) und dem Körper (4) des Kochtopfs eingerichtet ist, um die hermetische Verschließung davon zu vollziehen, wobei die Steuerung (1) einen hinteren Vorsprung (9) aufweist, welcher einem Anschlag (14) gegenüberstehen kann, welcher auf demselben Griff (2) des Deckels (3) angebracht ist, und zwar auf eine derartige Weise, dass der Anschlag (14) in der offenen oder Ruheposition ein Hindernis bildet, welches die Rückwärtsverschiebung der Bedienungssteuerung (1) behindert, wobei ein unterer Vorsprung (10) der Letzteren mit einer vertikalen Teilung (19) des Griffs (5) der Kochtopfkörpers (4) konfrontiert wird, wodurch Drehen zwischen den beiden verhindert wird und der Vorsprung (6) in Form eines vorderen Drehzapfens gehalten wird und den Dichtungseinsatz (7) aus seiner Aufnahme (8) stößt, so dass sich, wenn der Kochtopf schlecht geschlossen wird, auf der Innenseite kein Druck aufbauen kann; mit der Besonderheit, dass bei der entsprechenden Schließung und Drehung des Griffs (2) des Deckels (3) in Bezug auf den Griff (5) des Kochtopfkörpers (4) der Anschlag (14) des Griffs (2) des Deckels (3) über eine nockenförmige Rampe (18) gleitet, welche im Griff (5) des Kochtopfkörpers (4) eingerichtet ist, wodurch die Anhebung des Anschlags (14) und die Unterbringung davon in einer Nut (15) des hinteren Vorsprungs der Bedienungssteuerung (1) hervorgerufen wird, welche mittels einer Feder (6') dauernd rückwärts gestoßen wird, wobei die Verschiebung und das jeweilige Zurückziehen des vorderen drehzapfenförmigen Vorsprungs die Positionierung der hermetisch schließenden Dichtung (7) in ihrer Aufnahme (8) ermöglichen, um die hermetische Verschließung des Kochtopfs zu erhalten.

2. Sicherheitsvorrichtung nach Anspruch 1, **dadurch gekennzeichnet, dass** in der angehobenen Position der Spindel (12), wobei das entscheidende Element im Drucksensor dem Sicherheitsventil (11) entspricht, das im Kochtopf vorgesehen ist, die Spindel (12) ein Hindernis bildet, welches die Vorwärtsverschiebung der Bedienungssteuerung (1) unmöglich macht, ebenso wie es die Drehung unmöglich macht, da in dieser Position der untere Vorsprung (10) der Bedienungssteuerung (1) einem Vorsprung (20), welcher auf dem Griff (5) des Kochtopfkörpers (4) vorgesehen ist, gegenübersteht, wodurch die Unmöglichkeit des Drehens und infolgedessen des Öffnens des Kochtopfs, während auf der Innenseite davon Druck aufgebaut wird, sichergestellt ist.

3. Sicherheitsvorrichtung nach Anspruch 1 und 2, **dadurch gekennzeichnet, dass** das Sicherheitsventil einen Mechanismus umfasst, welcher zwischen einem Ventilkörper (21), der zur Verbindung mit der entsprechenden Öffnung im Deckel des Kochtopfs imstande ist, und einer oberen Mutter (22), welche am Körper (21) befestigt ist, angebracht ist, wobei der Mechanismus aus einem Kranz (23) gebildet ist, welcher axial zwischen dem Ventilkörper (21) und der Mutter (22) untergebracht ist, wobei seine Enden in den gegenüberliegenden Basen des Körpers (21) und der Mutter (22) untergebracht werden, mit der Besonderheit, dass in diesen Kranz (23) auf eine frei verschiebbar Weise eine Spindel (12) von größerer Länge als der Kranz eingepasst ist, wobei sie ihr unteres Ende mit einer O-Ring-Dichtung (13) versehen aufweist, welche in der Ruheposition vom unteren Ende des Kranzes (23) getrennt ist, während bei Erwärmen und Aufbauen von Dampf auf der Innenseite des Kochtopfs die Aufwärtsbewegung der Spindel und das Pressen der O-Ring-Dichtung (13) davon gegen das untere Ende des Kranzes (23) hervorgerufen wird, wodurch der Durchgang blockiert wird; der Kranz weist einen mittleren ringförmigen Vorsprung (24) auf, unter welchem ein hermetisch schließende zweite O-Ring-Dichtung (25) angeordnet ist, welche gegen einen inneren ringförmigen Vorsprung des Ventilkörpers (21) aufliegt und den Ausgang nach außen blockiert, wobei der Kranz (23) mittels einer Feder (32) ständig zur geschlossenen Position gestoßen wird, wobei ihre Kraft mittels eines Drucks, welcher größer als der Arbeitsdruck des Kochtopfs ist, überwunden wird, um den Kranz (23) in der axialen Richtung zu verschieben, wobei die O-Ring-Dichtung (25) von der inneren Schulter des Ventilkörpers (21) getrennt wird und dem Dampf erlaubt, aus dem Inneren des Kochtopfs nach außen zu entweichen.

## Revendications

1. Dispositif de sécurité pour cocottes minute, pouvant être appliqué au type d'appareils de cuisson qui comprend une soupape (11) qui agit en cas de pression interne excessive dans l'appareil de cuisson afin d'évacuer la vapeur, et laquelle soupape comprend un capteur de pression constitué d'une tige (12) pouvant être déplacée vers le haut et vers le bas respectivement en présence et en absence de pression à l'intérieur, le dispositif étant constitué d'un élément de commande (1) pouvant être déplacé vers l'avant et vers l'arrière afin d'effectuer l'ouverture et la fermeture de l'appareil de cuisson, lequel élément de commande (1) est monté dans la poignée (2) fixée au couvercle (3) de l'appareil de cuisson, le corps (4) de l'appareil de cuisson présentant une autre poignée (5) qui, en position fermée, est située en face et en dessous de la précédente poignée, **caractérisé en ce que** l'élément de commande (1) présente sur sa partie avant une saillie (6) en forme de pivot en face du dispositif d'étanchéité correspondant (7) situé dans un logement (8) entre le couvercle (3) et le corps (4) de l'appareil de cuisson, afin de mettre en oeuvre la fermeture hermétique de celui-ci, ledit élément de commande (1) présentant une saillie arrière (9) qui peut faire face à une butée (14) montée sur la même poignée (2) du couvercle (3), de telle sorte qu'en position ouverte ou d'arrêt ladite butée (14) constitue un obstacle qui empêche le déplacement vers l'arrière de l'élément de commande (1), mettant une saillie inférieure (10) de ce dernier en face d'un partage vertical (19) de la poignée (5) du corps de l'appareil de cuisson (4) empêchant les deux de tourner et maintenant la saillie (6) en forme d'un pivot avant poussant le joint d'étanchéité (7) en dehors de son logement (8) de sorte que quand l'appareil de cuisson est mal fermé, la pression ne peut s'accumuler à l'intérieur ; avec la particularité que, dans la fermeture et la rotation correspondante de la poignée (2) du couvercle (3) par rapport à la poignée (5) du corps de l'appareil de cuisson (4), la butée (14) de la poignée (2) du couvercle (3) glisse sur une rampe en forme de came (18) logée dans la poignée (5) du corps de l'appareil de cuisson (4), produisant l'élévation de ladite butée (14) et le logement dans une rainure (15) de celle-ci d'une saillie arrière de l'élément de commande (1), poussé continuellement vers l'arrière au moyen d'un ressort (6'), dont le déplacement et la rétraction respective de la saillie avant en forme de pivot permettent le positionnement du joint d'étanchéité (7) dans son logement (8) afin d'obtenir la fermeture hermétique de l'appareil de cuisson.

2. Dispositif de sécurité selon la revendication 1, **caractérisé en ce que** dans la position élevée de la tige (12), élément décisif dans le capteur de pression correspondant à la soupape de sécurité (11) situé dans l'appareil de cuisson, ladite tige (12) constitue un obstacle rendant impossible le déplacement vers l'avant de l'élément de commande (1), tout comme la rotation, étant donné que, dans cette position, la saillie inférieure (10) de l'élément de commande (1) est en face d'une saillie (20) située sur la poignée (5) du corps de l'appareil de cuisson (4), garantissant l'impossibilité de tourner et par conséquent d'ouvrir l'appareil de cuisson pendant que la pression s'accumule à l'intérieur de celui-ci.

3. Dispositif de sécurité selon les revendications 1 et 2, **caractérisé en ce que** la soupape de sécurité comprend un mécanisme monté entre le corps de soupape (21), pouvant être associé avec l'orifice correspondant dans le couvercle de l'appareil de cuisson, et un écrou supérieur (22) fixé au dit corps (21), lequel mécanisme est formé d'une bague (23) logée axialement entre le corps de soupape (21) et l'écrou (22), avec ses extrémités encastrées dans les bases opposées desdits corps (21) et écrou (22), avec la particularité que dans cette bague (23) est insérée, de manière à pouvoir être déplacée librement, une tige (12) de longueur supérieure à la bague, l'extrémité inférieure de la tige étant pourvue d'un joint torique (13), qui est séparé, en position d'arrêt, de l'extrémité inférieure de la bague (23), pendant que lors du réchauffement et de l'accumulation de vapeur à l'intérieur de l'appareil de cuisson, la tige est déplacée vers le haut et le joint torique (13) de celle-ci est pressé contre l'extrémité inférieure de la bague (23), bloquant le passage ; la bague présente une saillie annulaire intermédiaire (24), sous laquelle est situé un second joint torique (25) fermant hermétiquement qui s'appuie contre une saillie annulaire interne du corps de soupape (21), bloquant la sortie vers l'extérieur, ladite bague (23) étant constamment poussée vers ladite position fermée au moyen d'un ressort (32) dont la force est maîtrisée grâce à une pression supérieure à la pression de fonctionnement de l'appareil de cuisson, afin de déplacer en direction axiale la bague (23), le joint torique (25) étant séparé de l'épaulement interne du corps de soupape (21) permettant à la vapeur de s'échapper de l'intérieur de l'appareil de cuisson vers l'extérieur.
